# EUROPÄISCHE PATENTSCHRIFT

(11) **EP 3 275 305 B1**
(45) Veröffentlichungstag und Bekanntmachung des Hinweises auf die Patenterteilung: **12.08.2020**
(21) Anmeldenummer: 17171197.1
(22) Anmeldetag: 16.05.2017
(51) Int. Cl.: A01F 15/07

(54) **BALLENPRESSE MIT WICKELVORRICHTUNG**
BALER WITH WRAPPING DEVICE
PRESSE À BALLE COMPRENANT UN DISPOSITIF D'ENROULEMENT

(30) Priorität: 29.07.2016 DE 102016114072
(43) Veröffentlichungstag der Anmeldung: 31.01.2018
(73) Patentinhaber: Usines CLAAS France S.A.S, 57140 St. Rémy / Woippy (FR)
(72) Erfinder: Baros, Geoffroy, 90130 Montreux Chateau (FR); Laruelle, Thibault L, 57130 Ars sur Moselle (FR)
(74) Vertreter: CLAAS Gruppe

(56) Entgegenhaltungen:
- EP-A1- 1 602 269
- WO-A1-00/16607
- DE-A1- 10 114 577

## Beschreibung

Die Erfindung betrifft eine Ballenpresse, insbesondere eine Rundballenpresse, mit einer Pressvorrichtung und einer dieser nachgeordneten Wickelvorrichtung nach Anspruch 1, sowie ein Verfahren zum Betreiben einer Ballenpresse nach Anspruch 10.

Ballenpressen werden üblicherweise von einem Zugfahrzeug wie einem Traktor gezogen, um in einem Schwad abgelegtes Erntegut von einem Feld aufzunehmen und in einer Presskammer zu Ballen zu pressen. Das von der Ballenpresse beispielsweise mittels einer sogenannten Pickup aufgenommene Erntegut wird dabei in die Presskammer geleitet und dort zu einem Ballen geformt und verdichtet. Die Ballenpressen können beispielsweise Rundballenpressen zum Pressen von Rundballen oder auch Quaderpressen zum Pressen von im Wesentlichen eckigen Ballen sein. Die Ballenpresse kann dabei mittels einer Zapfwelle des Zugfahrzeugs von diesem angetrieben werden. Der Ballen wird üblicherweise in der Presskammer mit einem Garn oder einem Netz umwickelt, um ein Auflösen des fertig gepressten Ballens zu vermeiden und dessen Stabilität zu erhöhen. Zusätzlich ist der Presskammer häufig eine Wickelvorrichtung nachgeordnet, welche ein Umhüllen des aus der Presskammer ausgeworfenen Ballens mit einem bahnförmigen Wickelmaterial, beispielsweise einer Folie, ermöglicht. Durch einen im Wesentlichen luft- und flüssigkeitsdichten Einschluss des Ballens durch die Folie kann ein Fermentierungsprozess ermöglicht oder unterstützt werden. Zudem kann der Ballen so besser vor Umwelteinflüssen geschützt werden.

Zum Umwickeln mit dem Wickelmaterial wird der Rundballen von der Presskammer an die Wickelvorrichtung übergeben, und auf einem Wickeltisch abgelegt. Der Wickeltisch ist dabei Bestandteil der Wickelvorrichtung, welche zudem mindestens einen Wickelarm umfasst, an welchem mindestens eine Rolle des Wickelmaterials abrollbar angeordnet ist. Das Umwickeln des Ballens erfolgt zum einen durch ein Drehen des Ballens mittels des Wickeltisches um seine horizontale Achse, sowie durch eine Rotation des Wickelarmes um eine senkrechte Achse um den Ballen herum. Da das Wickelmaterial auf Rollen vorgehalten wird, ist ein regelmäßiger Wechsel der leeren Rollen gegen neue volle Rollen erforderlich. Aufgrund des hohen Gewichtes der Rollen mit Wickelmaterial beispielsweise in Form von Folie, ist eine manuelle Handhabung beschwerlich und zeitintensiv. Aufgrund der Lagerung der Austauschrollen unter einer Verkleidung der Ballenpresse, wie beispielsweise bei der aus der DE 102011100502 A1 bekannten Ballenpresse, kann es zu verlängerten Stillstandzeiten beim Wechseln der Wickelmaterialrollen kommen, da hier zunächst noch die Verkleidung der Ballenpresse geöffnet und anschließend wieder geschlossen werden muss.

Eine Ballenpresse mit einem nachgeschalteten Ballenumwickler ist in der EP 1 602 269 A1 offenbart, wobei Vorratsrollen eines Wickelmaterials mittels einer Transporteinrichtung zu einer Schnellwechseleinrichtung gefördert werden können, durch welche die aufgebrauchten Materialbahnrollen gegen neue Vorratsrollen ausgewechselt werden können.

Aus der WO 00/16607 A1 ist eine Wickelvorrichtung für Rundballen bekannt, welche eine Halterung für mehrere Rollen des Wickelmaterials aufweist, durch welche ein vereinfachtes Wechseln einer verbrauchten Rolle gegen eine neue, volle Rolle des Wickelmaterials ermöglicht wird. Die Halterung kann dabei mehrere Rollen nebeneinander in im Wesentlichen vertikaler Ausrichtung aufnehmen, wobei eine der Rollen dabei in Benutzung ist, und das Wickelmaterial zum Umwickeln des Ballens abgewickelt werden kann. Die Halterung ist um eine vertikale Achse drehbar ausgestaltet. Zum Austauschen einer verbrauchten Rolle kann durch eine Rotation der Halterung eine neue, volle Rolle an die Stelle der auszutauschenden Rolle verbracht werden. Zum Wechseln der Rollen ist jedoch ein manuelles Eingreifen des Fahrers notwendig, beispielsweise zum Einspannen der neuen Rolle vor deren Nutzung. Zudem benötigt diese Art der Vorhaltung von Ersatzrollen aufgrund der Ausgestaltung der Halterung einen größeren Platzbedarf und ist für Wickelvorrichtungen mit rotierenden Wickelarmen ungeeignet, da sämtliche Rollen mit dem Wickelarm in Rotation versetzt werden müssten. Weiterhin ist als nachteilig anzusehen, dass aufgrund des notwendigen manuellen Eingreifens keine Fernbedienung vom Zugfahrzeug aus möglich ist.

Es ist daher eine Aufgabe der Erfindung, eine Ballenpresse bereitzustellen, welche eine Reduzierung der Stillstandzeiten der Presse bei einem Wechsel des Wickelmaterials in Rollenform ermöglicht, und zudem eine Verringerung der Arbeitsbelastung eines Bedieners der Ballenpresse ermöglicht.

Diese Aufgabe wird erfindungsgemäß durch eine Ballenpresse mit den Merkmalen des Anspruches 1, sowie durch ein Verfahren zum Betreiben einer Ballenpresse gemäß Anspruch 10 gelöst. Vorteilhafte Ausgestaltungen sind in den abhängigen Ansprüchen wiedergegeben, welche jeweils für sich genommen oder in Kombination miteinander einen Aspekt der Erfindung darstellen können.

Eine Ballenpresse, insbesondere Rundballenpresse, umfassend eine Pressvorrichtung zum Pressen Presse von Ballen aus Erntegut, und eine der Pressvorrichtung nachgeordneten Wickelvorrichtung zum Umhüllen eines gepressten Ballens mit einem Wickelmaterial, welches auf Rollen vorgehalten wird, wobei die Wickelvorrichtung einen an einem Tragrahmen drehbar gelagerten Wickelarm mit mindestens einer Rollenhalterung aufweist, wobei mindestens eine Rolle des Wickelmaterials an der Rollenhalterung in einer Betriebsposition zum Abwickeln des Wickelmaterials lagerbar ist, und eine Ladevorrichtung zum Verbringen mindestens einer Rolle des Wickelmaterials zwischen der rollenhalterseitigen Betriebsposition und/oder einer presskammerseitigen Entnahmeposition aufweist. Gemäß der Erfindung weist die Ladevorrichtung mindestens einen Ladearm auf, wobei der Ladearm an dem Tragrahmen, insbesondere einem vertikalen Abschnitt des Tragrahmens, angeordnet ist. Die Ladevorrichtung ermöglicht einem Bediener der Ballenpresse ein vereinfachtes Verbringen einer Rolle des Wickelmaterials an den Wickelarm. Weiterhin ermöglicht die Ladevorrichtung das Wechseln der Rollen an dem Wickelarm auch während des Betriebes der Ballenpresse, so dass Stillstandzeiten und insbesondere ein Anhalten, besonders zum manuellen Wechseln von Rollen des Wickelmaterials, vermieden werden können. Zudem kann durch eine Steuervorrichtung ein automatischer Wechsel, oder zumindest ein beispielsweise aus einer Fahrerkabine, fernbedienbarer Wechsel von Rollen an dem Wickelarm ermöglicht werden. Vorteilhaft ist hierbei neben einer deutlichen Reduzierung der Stillstandzeiten der Ballenpresse auch eine Reduzierung der Belastung des Fahrers durch einen automatischen oder fernbedienbaren Rollenwechsel. Ein weiterer Vorteil der Wickelvorrichtung ist, dass durch Ausnutzung vorhandener Strukturbauteile wie dem Tragrahmen und durch die Anordnung des Ladearmes daran, eine bauraumsparende Ausgestaltung der Ladevorrichtung ermöglicht wird, so dass trotz der eingerüsteten Ladevorrichtung eine Gesamtlänge der Ballenpresse nicht vergrößert werden muss.

In einer bevorzugten Ausgestaltung der Erfindung ist der Ladearm rotatorisch und/oder, insbesondere in vertikaler Richtung, translatorisch, im Wesentlichen parallel zu einem Abschnitt des Tragrahmens, verlagerbar ausgebildet. Der Ladearm ist entlang des Tragrahmens verfahrbar und um diesen herum, im Wesentlichen in einem Vollkreis, rotierbar ausgebildet. Durch diese Ausgestaltung kann der Ladearm mit geringem konstruktiven Aufwand kostengünstig an dem Tragrahmen angeordnet werden und ermöglicht mit einer einfachen Kinematik ein zuverlässiges Handhaben der Rollen des Wickelmaterials.

In einer besonders bevorzugten Ausgestaltung der Erfindung weist der Ladearm mindestens eine erste Rollenaufnahme zur Handhabung von Rollen auf. Über die Rollenaufnahme ist eine zuverlässige form- und/oder kraftschlüssige Handhabung jeweils einer Rolle des Wickelmaterials möglich. Die Rollenaufnahme kann an die jeweils verwendeten Rollen angepasst werden.

In einer weiteren bevorzugten Ausgestaltung der Erfindung ist vorgesehen, dass der Ladearm eine zweite Rollenaufnahme aufweist, welche insbesondere an einem der ersten Rollenaufnahme gegenüberliegenden Ende des Ladearmes angeordnet ist. Durch die zweite Rollenaufnahme ist eine Handhabung von zwei Rollen gleichzeitig möglich, wodurch die Zeit für das Wechseln einer Rolle verringert werden kann. Zudem ist durch die gegenüberliegende endseitige Anordnung der ersten und zweiten Rollenaufnahme an dem Ladearm eine bessere Gewichtsverteilung an dem Ladearm möglich.

Vorzugsweise ist der Ladearm im Wesentlichen flach ausgebildet und weist eine längliche Erstreckung auf, wobei der Ladearm im Wesentlichen mittig an dem Tragrahmen drehbar gelagert ist, und endseitig mindestens eine Rollenaufnahme aufweist. Die flache und/oder flächige Ausgestaltung des Ladearms, insbesondere in vertikaler Richtung, hat den Vorteil, dass der Ladearm nur einen geringen Bauraumbedarf aufweist. Durch den reduzierten Bauraum, insbesondere in vertikaler Richtung, kann der nutzbare Verfahrweg des Ladearms besonders in vertikaler Richtung vergrößert werden.

In vorteilhafter Weiterbildung der Erfindung ist eine Rollenaufnahme in Form einer Aussparung an dem Ladearm ausgebildet. Die Aussparung kann seitlich endseitig an dem Ladearm angeordnet sein. Dies ermöglicht das Aufnehmen einer Rolle des Wickelmaterials durch eine Rotation des Ladearmes, so dass beispielsweise eine Rollenachse im Wesentlichen in der Aussparung angeordnet ist. Dies hat den Vorteil, dass ein Aufnehmen einer Rolle durch eine konstruktiv einfache kinematische Bewegung ermöglicht werden kann.

In einer bevorzugten Ausgestaltung der Erfindung ist zur Halterung einer Rolle jeweils ein Rollenträger vorgesehen, wobei ein Rollenträger jeweils durch den Ladearm und/oder die Rollenaufnahme aufnehmbar ausgebildet ist. Ein Rollenträger kann dabei jeweils durch eine Hohlachse der Rolle hindurchragen und endseitig an der Ballenpresse lagerbar sein. Der Rollenträger ermöglicht eine sichere Handhabung einer Rolle mit definierten Kontaktflächen, unabhängig von einer auf der Rolle vorhandenen Menge an Wickelmaterial, wodurch beispielsweise ein Außendurchmesser der Rolle beeinflußbar ist.

Weiterhin bevorzugt ist eine Lagervorrichtung zum Vorhalten von mindestens einer Rolle des Wickelmaterials vorgesehen. Die Lagervorrichtung ermöglicht das Mitführen von weiteren Rollen des Wickelmaterials an der Ballenpresse, so dass auch längere Arbeitseinsätze unterbrechungsfrei ohne Nachladen von Wickelmaterial durchführbar sind.

In einer bevorzugten Ausgestaltung der Erfindung weist die Lagervorrichtung für die Aufnahme eines Rollenträgers jeweils eine Trägeraufnahme auf, wobei zur Aufnahme mehrerer Rollen mehrere Trägeraufnahmen starr oder beweglich miteinander verbindbar sind. Durch die Trägeraufnahmen sind Rollen jeweils in einer vorgegebenen Position anordbar, wodurch Störungen in der Lagereinrichtung, beispielsweise durch unerwünschten Kontakt zwischen Rollen, vermieden werden können. Ebenfalls können Trägeraufnahmen beispielsweise bei einem Beladen der Ladevorrichtung unbesetzt gelassen werden, um leere Rollen von dem Wickelarm aufnehmen zu können. Starr verbundene Trägeraufnahmen können beispielsweise auf einem drehbaren Bauteil angeordnet sein, wodurch eine sehr einfache, kostengünstige Ausgestaltung der Lagervorrichtung herstellbar ist. Beweglich miteinander verbundene Trägeraufnahmen können beispielsweise kettenförmig miteinander verbindbar sein, wodurch eine robuste, konstruktive einfache Lagervorrichtung zur beweglichen Lagerung von Rollen an der Ballenpresse umsetzbar ist.

Weiterhin betrifft die Erfindung ein Verfahren zum Betreiben einer, insbesondere wie vorstehend beschriebenen, Ballenpress mit einer Wickelvorrichtung, wobei gemäß der Erfindung die Schritte, Anfahren einer Entnahmeposition mit einem Ladearm einer Ladevorrichtung, Aufnahme einer Rolle des Wickelmaterials aus der Entnahmeposition mittels des Ladearmes, rotatorisches und/oder translatorisches Verfahren des Ladearmes von der Entnahmeposition zu einer Betriebsposition an einer wickelarmseitigen Rollenhalterung und Absetzen der Rolle in der Betriebsposition in die Rollenhalterung an dem Wickelarm

vorgesehen sind. Anschließend kann ein Verfahren des Ladearmes in eine sichere Position erfolgen. Dieses Verfahren, insbesondere mit einer wie vorstehend beschriebenen Ballenpress, ermöglicht ein vereinfachtes Wechseln der Rollen an dem Wickelarm auch während des Betriebes der Ballenpresse, so dass Stillstandzeiten und insbesondere ein Anhalten, besonders zum manuellen Wechseln von Rollen des Wickelmaterials, vermieden werden können. Zudem kann durch eine Steuervorrichtung ein automatisches oder zumindest ein fernbedienbareres Wechseln von Rollen an dem Wickelarm ermöglicht werden. Vorteilhaft ist hierbei neben einer deutlichen Reduzierung der Stillstandzeiten der Ballenpresse auch eine Reduzierung der Belastung des Fahrers durch einen automatischen oder fernbedienbaren Rollenwechsel.

Besonders bevorzugten umfasst das Verfahren zum Betreiben einer Ballenpresse weiterhin die Schritte, Anfahren der Betriebsposition zur Entnahme einer auszutauschenden Rolle mittels des Ladearms, rotatorisches und/oder translatorisches Verfahren des Ladearmes mit einer oder zwei Rollen, Absetzen der aus der Betriebsposition entnommenen auszutauschenden Rolle in der Entnahmeposition, insbesondere in der Entnahmeposition, aus der die neue Rolle entnommen wurde. Das Entnehmen der auszutauschenden Rolle aus der Betriebsposition kann dabei nach einer vorherigen Entnahme einer vollen Rolle aus der Entnahmeposition erfolgen, wodurch die Zeit zum Wechseln der Rollen und die Stillstandzeit der Ballenpresse reduziert werden können. Durch das gleichzeitige Handhaben von zwei Rollen, beispielsweise einer auszutauschenden und eine neuen Rolle, kann die Stillstandzeit weiter reduziert werden.

In einer weiter bevorzugten Ausgestaltung des Verfahrens sind weiterhin die Schritte, Anfahren einer, insbesondere unterhalb einer Entnahmeposition angeordneten, Ladeposition mit dem Ladearm zur Aufnahme einer Rolle des Wickelmaterials, Verfahren der Ladevorrichtung von der Ladeposition zu der Entnahmeposition oder Betriebsposition, Absetzen der Rolle aus der Ladeposition in der Entnahmeposition zum Beladen der Ladevorrichtung oder in der Betriebsposition vorgesehen. Hierdurch kann ein zügiges und ermüdungsfreies Beladen der Ladevorrichtung und/oder Wickelvorrichtung für einen Bediener ermöglicht werden.

Weitere Merkmale der Erfindung ergeben sich aus der nachfolgenden Beschreibung sowie aus den Zeichnungen, in denen ein Ausführungsbeispiel der Erfindung dargestellt und beschrieben ist.

Es zeigen:
- Fig. 1:: eine schematische, teilgeschnittene Seitenansicht einer Ballenpresse;
- Fig. 2:: eine perspektivische Ansicht eines Ladearmes einer Ladevorrichtung an einem Tragrahmen der Wickelvorrichtung;
- Fig. 3:: eine perspektivische Darstellung eines Ladearmes mit einer aufgenommenen Rolle;
- Fig. 4:: eine Ladevorrichtung; und
- Fig. 5a-d:: eine Darstellung eines Ablaufs eines Rollentausches an dem Wickelarm.

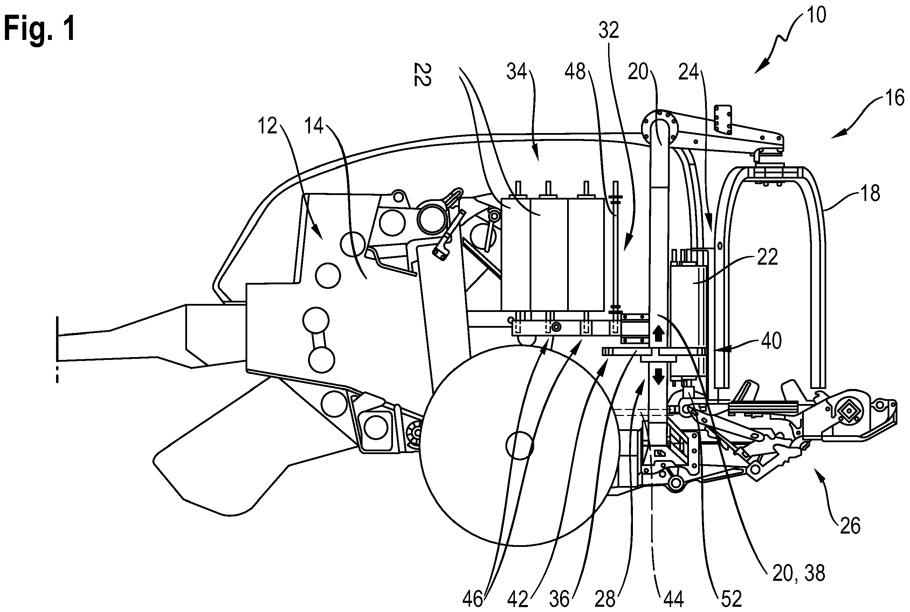

Figur 1 zeigt in einer teilweise geschnittenen Seitenansicht eine schematische Darstellung einer Ballenpresse 10. Die Ballenpresse 10 ist in Form einer Rundballenpresse ausgebildet und weist eine Pressvorrichtung 12 mit einer Presskammer 14 auf. Über eine an sich bekannte und daher nicht näher dargestellte Aufnahmeeinrichtung wird Erntegut aufgenommen und in der Presskammer 14 verdichtet und zu einem Rundballen gepresst. Zum Umwickeln eines Rundballens (nicht dargestellt) wird dieser an die der Pressvorrichtung 12 nachgeordneten Wickelvorrichtung 16 übergeben. Die Wickelvorrichtung 16 weist dabei einen Wickelarm 18 auf, welcher um eine im Wesentlichen senkrechte Achse drehbar an einem Tragrahmen 20 gelagert ist. An jedem Ende des zweigliedrig, U-förmig ausgebildeten Wickelarmes 18 ist bahnförmiges Wickelmaterial, beispielsweise in Form von Folie, als Rolle 22 in einer Rollenhalterung 24 angeordnet (hier nur an einem Ende des Wickelarms dargestellt). Durch eine Rotation der Rolle 22 des Wickelmaterials um den Rundballen, welcher auf einem Wickeltisch 26 der Wickelvorrichtung 16 angeordnet ist, kann der Rundballen mit Wickelmaterial umwickelt werden. Der Rundballen ist zusätzlich durch den Wickeltisch 26 um eine im Wesentlichen horizontal angeordnete Achse drehbar, so dass durch Zusammenwirken mit der Drehbewegung des Wickelarmes 18 der Rundballen im Wesentlichen vollständig mit dem folienförmigen Wickelmaterial umschlossen werden kann.

Gemäß der Erfindung ist eine Ladevorrichtung 28 zum Verbringen mindestens einer Rolle 22 zwischen einer rollenhalterseitigen Betriebsposition 30 und/oder einer presskammerseitigen Entnahmeposition 32 an einer Lagervorrichtung 34 vorgesehen. Die Ladevorrichtung 28 weist dabei einen Ladearm 36 auf, welcher an einem, insbesondere vertikalen, Abschnitt 38 des Tragrahmens 20 angeordnet ist. Der Ladearm 36 ist entlang des Abschnittes 38 des Tragrahmens 20 translatorisch verfahrbar und um diesen rotatorisch drehbar ausgebildet. Der Ladearm 36 ist im Wesentlichen flach und/oder flächig ausgebildet und weist zumindest an einem Ende eine erste Rollenaufnahme 40 zur Aufnahme und/oder Handhabung einer Rolle 22 des Wickelmaterials auf. An einem der ersten Rollenaufnahme 40 gegenüberliegenden Ende weist der Ladearm 36 eine zweite Rollenaufnahme 42 auf. Der Ladearm 36 ist dabei im Wesentlichen in seiner Mitte translatorisch und rotatorisch verschiebbar an dem Tragrahmen 20 gelagert. Die erste und zweite Rollenaufnahme 40, 42 sind dabei im Wesentlichen in gleichem Abstand zum Tragrahmen 20 gegenüberliegend angeordnet.

Die Rollenaufnahmen 40, 42 des Ladearmes 36 sind dabei derart ausgebildet, dass durch eine Rotation des Ladearmes 36 eine kraft- und/oder formschlüssige, insbesondere verriegelbare, Aufnahme einer Rolle 22 erfolgen kann. Der Ladearm 36 wird hierfür in im Wesentlichen vertikaler Richtung verfahren, bis der Ladearm 36 unterhalb der aufzunehmenden Rolle 22 positioniert ist und durch eine Rotation die betreffende Rolle 22 aufnehmbar ist. Durch die Ladevorrichtung 34 sind eine Betriebsposition 30, eine Entnahmeposition 32, und eine Ladeposition 44 mittels des Ladearms 36 anfahrbar. In einer Betriebsposition 30 ist eine aufzunehmende oder abzusetzende Rolle 22 in der Rollenhalterung 24 an dem Wickelarm 18 angeordnet. Die Entnahmeposition 32 ist der Lagervorrichtung 34, insbesondere presskammerseitig, zugeordnet und bestimmt die Position, in welcher eine Rolle 22 durch den Ladearm 36 aus der Lagervorrichtung 34 entnehmbar oder in diese absetzbar ist. Eine Lagervorrichtung 34, welche mehrere Rollen 22 des Wickelmaterials vorhalten kann, weist zu der Entnahmeposition 32 noch mindestens eine Lagerposition 46 jeweils für eine Rolle 22 auf. Durch eine beispielsweise Drehbewegung der Lagervorrichtung 34 kann eine Lagerposition 46 in die Entnahmeposition 32 verbracht werden. Die Lagerposition 46 und/oder Entnahmeposition 32 kann dabei mit einer Rolle 22 belegt oder unbelegt sein, beispielsweise um eine auszutauschende leere Rolle 22 aufzunehmen. In der Ladeposition 44 ist der Ladearm 36 beispielsweise in die in vertikaler Richtung tiefst mögliche Position verfahren, um eine Beladen der Ladevorrichtung 28 und des Ladearmes 36 mit einer Rolle 22 zu vereinfachen. Aus der Ladeposition 44 ist eine Rolle 22 in die Betriebsposition 30 und/oder die Entnahmeposition 32 verbringbar. Die Rolle 22 aus der Entnahmeposition 32 ist dabei in eine Lagerposition 46 verbringbar, beispielsweise bei einem erstmaligen Beladen oder Nachladen der Lagervorrichtung 34.

Zur besseren Handhabung der Rollen 22, insbesondere unabhängig von der Menge an Wickelmaterial, ist für jede Rolle 22 ein Rollenträger 48 vorgesehen, welcher stabförmig ausgebildet ist, und koaxial zu einer Drehachse der Rollen 22 angeordnet ist. Ein Rollenträger 48 ragt dabei an mindestens einem Ende der Rolle 22 über diese hinaus, wobei dieses Ende der Aufnahme durch den Ladearm 36 dient.

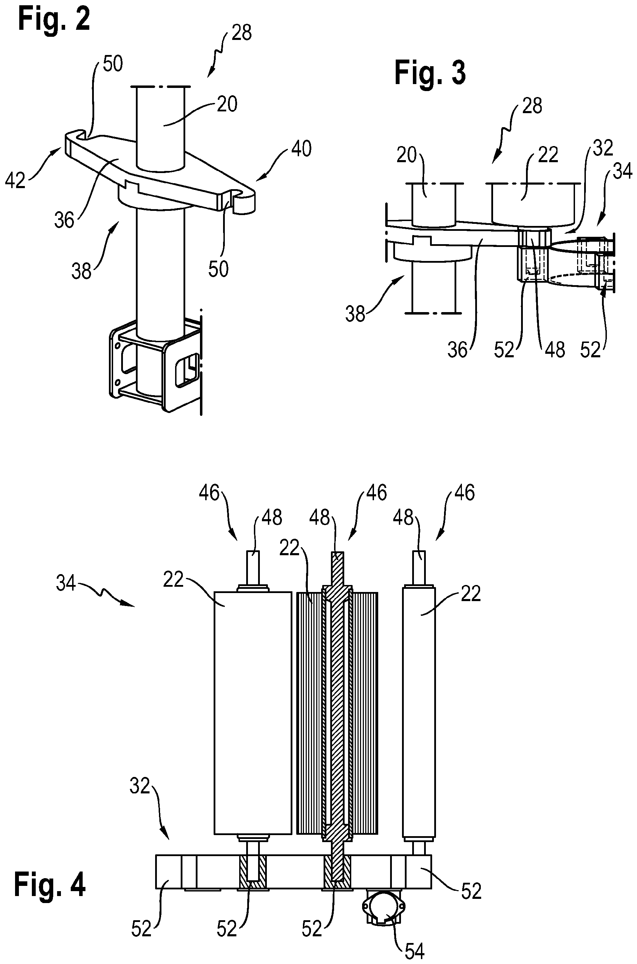

Der Ladearm 36 (Fig. 2) weist an seinen Enden eine erste und eine zweite Rollenaufnahme 40, 42 auf. Die Rollenaufnahmen 40, 42 sind dabei jeweils endseitig in Form einer seitlich an dem Ladearm 36 ausgebildeten Aussparungen 50 ausgestaltet. Die Aussparungen 50 können an derselben oder an gegenüberliegenden Seiten des Ladearmes 36 ausgestaltet sein. Durch die Aussparungen 50 kann durch eine einfache Rotation des Ladearmes eine Aufnahme einer Rolle 22 erfolgen.

Dies ist in Figur 3 dargestellt. Die Ladevorrichtung 28 ist mit dem Ladearm 36 in die Entnahmeposition 32 an der Lagervorrichtung 34 verfahren. Die Rolle 22 in der Entnahmeposition 32 ist an einem Rollenträger 48 gelagert, welcher an seinem unteren Ende in einer Trägeraufnahme 52 der Lagervorrichtung 34 aufgenommen ist. Dabei ist ein Abstand zwischen der Rolle 22 und der Trägeraufnahme 52 derart bemessen, dass der Rollenträger 48 zwischen Rolle 22 und Trägeraufnahme 52 durch die Rollenaufnahme 40, 42 des Ladearmes 36 kraft- und/oder formschlüssig aufgenommen werden kann. Durch ein translatorisches Verfahren des Ladearmes 36 in vertikaler Richtung nach oben kann so die Rolle 22 aus der Entnahmeposition 32 entnommen werden. Bei einem Absetzen der Rolle 22 in der dargestellten Entnahmeposition 32, beispielsweise zum Beladen der Lagervorrichtung 34, würde die Rolle 22 durch ein rotatorisches Verschwenken des Lagerarmes 36 abgesetzt.

Die Trägeraufnahmen 52 der Lagervorrichtung 34 sind flexibel miteinander verbunden (Fig. 4), wodurch eine kettenförmige Lagervorrichtung 34 ausgebildet wird, welche beispielsweise durch eine Antriebseinheit 54 bewegbar ausgebildet ist, wodurch eine Lagerposition 46, mit oder ohne Rolle 22, jeweils in die Entnahmeposition 32 (in Fig. 4 ohne Rolle dargestellt) verbringbar ist. Denkbar ist auch eine starre Verbindung der Trägeraufnahmen 52, beispielsweise auf einer drehbaren Platte.

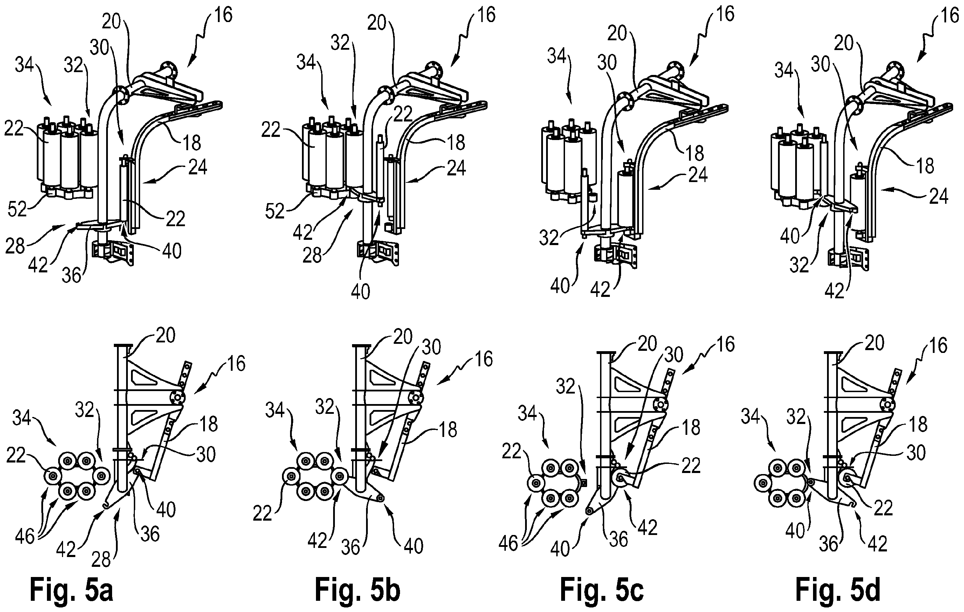

Das Auswechseln einer leeren, auszutauschenden Rolle 22 in der Rollenhalterung 24 ist in den Figuren 5a bis 5d jeweils perspektivisch und in einer Draufsicht dargestellt. Zunächst wird mit dem Ladearm 36 die Betriebsposition 30 an der Rollenhalterung 24 angefahren (Fig. 5a), welche durch entsprechendes Verschwenken des Wickelarmes 18 einstellbar ist. Die erste Rollenaufnahme 40 wird dabei durch Rotation des Trägerarms 36 mit dem Rollenträger 48 der auszutauschenden leeren Rolle 22 in Kontakt gebracht und durch vertikales, translatorisches Verfahren des Trägerarms 36 aus der Betriebsposition 30 und der Rollenhalterung 24 entnommen. Der Ladearm 36 mit der leeren Rolle 22 wird anschließend in die Entnahmeposition 32 der Lagervorrichtung 34 verbracht, um mittels der zweiten Rollenaufnahme 42 eine neue, volle Rolle 22 aus der Lagervorrichtung 34 zu entnehmen (Fig. 5b). Durch Rotation und translatorisches Verfahren wird der Ladearm 36 anschließend mit der zweiten Rollenaufnahme 42 in die Betriebsposition 30 verbracht, um die volle Rolle 22 in der Rollenhalterung 24 abzusetzen (Fig. 5c). Die erste Rollenaufnahme 40 mit der leeren Rolle 22 wird dabei ebenfalls mit verlagert. Die Wickelvorrichtung 16 ist nun wieder betriebsbereit. Der Ladearm 36 wird nun mit der ersten Rollenaufnahme 40 in die Entnahmeposition 32 verbracht, um eine Absetzten der leeren Rolle 22 in die Lagervorrichtung 34 zu ermöglichen. Die leere Rolle 22 wird dabei in die Trägeraufnahme 52 abgesetzt, aus der zuvor die neue, volle Rolle 22 entnommen wurde. Abschließend ist der Ladearm 36 in eine sichere Position verbringbar, in der beim Betrieb der Wickelvorrichtung 16 keine Kollisionsgefahr mit dieser besteht.

### Bezugszeichenliste

- 10: Ballenpresse
- 12: Pressvorrichtung
- 14: Presskammer
- 16: Wickelvorrichtung
- 18: Wickelarm
- 20: Tragrahmen
- 22: Rolle
- 24: Rollenhalterung
- 26: Wickeltisch
- 28: Ladevorrichtung
- 30: Betriebsposition
- 32: Entnahmeposition
- 34: Lagervorrichtung
- 36: Ladearm
- 38: Abschnitt
- 40: erste Rollenaufnahme
- 42: zweite Rollenaufnahme
- 44: Ladeposition
- 46: Lagerposition
- 48: Rollenträger
- 50: Aussparung
- 52: Trägeraufnahme
- 54: Antriebseinheit

## Patentansprüche

1. Eine Ballenpresse, insbesondere Rundballenpresse, mit einer Pressvorrichtung (12) zum Pressen von Ballen aus Erntegut, und einer der Pressvorrichtung (12) nachgeordneten Wickelvorrichtung (16) zum Umhüllen eines gepressten Ballens mit einem Wickelmaterial, welches auf Rollen (22) vorgehalten wird, wobei die Wickelvorrichtung (16) einen an einem Tragrahmen (20) drehbar gelagerten Wickelarm (18) mit mindestens einer Rollenhalterung (24) aufweist, wobei mindestens eine Rolle (22) des Wickelmaterials an der Rollenhalterung (24) in einer Betriebsposition (30) zum Abwickeln des Wickelmaterials lagerbar ist, und eine Ladevorrichtung (28) zum Verbringen mindestens einer Rolle (22) des Wickelmaterials zwischen der rollenhalterungsseitigen Betriebsposition (30) und/oder einer presskammerseitigen Entnahmeposition (32) aufweist,
**dadurch gekennzeichnet, dass**
die Ladevorrichtung (28) mindestens einen Ladearm (36) aufweist, wobei der Ladearm (36) an dem Tragrahmen (20), insbesondere einem vertikalen Abschnitt (38) des Tragrahmens (20), angeordnet ist.

2. Ballenpresse nach Anspruch 1, **dadurch gekennzeichnet, dass** der Ladearm (36) rotatorisch und/oder, insbesondere in vertikaler Richtung, translatorisch, im Wesentlichen parallel zu einem Abschnitt (38) des Tragrahmens (20), verlagerbar ausgebildet ist.

3. Ballenpresse nach einem der Ansprüche 1 oder 2, **dadurch gekennzeichnet, dass** der Ladearm (36) mindestens eine erste Rollenaufnahme (40) zur Handhabung von Rollen (22) aufweist

4. Ballenpresse nach einem der vorherigen Ansprüche, **dadurch gekennzeichnet, dass** der Ladearm (36) eine zweite Rollenaufnahme (42) aufweist, welche insbesondere an einem der ersten Rollenaufnahme (40) gegenüberliegenden Enden des Ladearmes (36) angeordnet ist.

5. Ballenpresse nach einem der vorherigen Ansprüche, **dadurch gekennzeichnet, dass** der Ladearm (36) im Wesentlichen flach ausgebildet ist und eine längliche Erstreckung aufweist, wobei der Ladearm (36) im Wesentlichen mittig an dem Tragrahmen (20) drehbar gelagert ist, und endseitig mindestens eine Rollenaufnahme (40, 42) aufweist.

6. Ballenpresse nach einem der vorherigen Ansprüche, **dadurch gekennzeichnet, dass** eine Rollenaufnahme (40, 42) in Form einer Aussparung (50) an dem Ladearm (36) ausgebildet ist.

7. Ballenpresse nach einem der vorherigen Ansprüche, **dadurch gekennzeichnet, dass** zur Halterung einer Rolle (22) jeweils ein Rollenträger (48) vorgesehen ist, wobei ein Rollenträger (48) jeweils durch den Ladearm (36) und/oder die Rollenaufnahme (40, 42) aufnehmbar ausgebildet ist.

8. Ballenpresse nach einem der vorherigen Ansprüche, **dadurch gekennzeichnet, dass** eine Lagervorrichtung (34) zum Vorhalten von mindestens einer Rolle (22) des Wickelmaterials vorgesehen ist.

9. Ballenpresse nach Anspruch 8, **dadurch gekennzeichnet, dass** die Lagervorrichtung (34) für die Aufnahme eines Rollenträgers (48) jeweils eine Trägeraufnahme (52) aufweist, wobei zur Aufnahme mehrerer Rollen (22) mehrere Trägeraufnahmen (52) starr oder beweglich miteinander verbindbar sind.

10. Verfahren zum Betreiben einer Ballenpresse (10) mit einer Wickelvorrichtung (16), insbesondere gemäß einem der vorherigen Ansprüche 1 bis 9, **gekennzeichnet durch** die Schritte
- Anfahren einer Entnahmeposition (32) mit einem Ladearm (36) einer Ladevorrichtung (28);
- Aufnahme einer Rolle (22) des Wickelmaterials aus der Entnahmeposition (32) mittels des Ladearmes (36);
- Rotatorisches und/oder translatorisches Verfahren des Ladearmes (36) von der Entnahmeposition (32) zu einer Betriebsposition (30) an einer wickelarmseitigen Rollenhalterung (24);
- Absetzen der Rolle (22) in der Betriebsposition (30), wobei die Rolle (22) in der Betriebsposition (30) in der Rollenhalterung (24) an dem Wickelarm (18) angeordnet ist.

11. Verfahren zum Betreiben einer Ballenpresse (10) mit einer Wickelvorrichtung (16) nach Anspruch 10, **gekennzeichnet durch** die weiteren Schritte
- Anfahren der Betriebsposition (30) zur Entnahme einer auszutauschenden Rolle (22) mittels des Ladearms (36);
- Rotatorisches und/oder translatorisches Verfahren des Ladearmes (36) mit einer oder zwei Rollen (22);
- Absetzen der aus der Betriebsposition (30) entnommenen auszutauschenden Rolle (22) in der Entnahmeposition (32), insbesondere in der Entnahmeposition (32), aus der die neue Rolle (22) entnommen wurde.

12. Verfahren zum Betreiben einer Ballenpresse (10) mit einer Wickelvorrichtung (16) nach einem der Ansprüche 10 oder 11, **gekennzeichnet durch** die Schritte
- Anfahren einer, insbesondere unterhalb einer Entnahmeposition (32) angeordneten, Ladeposition (44) mit dem Ladearm (36) zur Aufnahme einer Rolle (22) des Wickelmaterials;
- Verfahren der Ladevorrichtung (28) von der Ladeposition (44) zu der Entnahmeposition (32) oder Betriebsposition (30);
- Absetzen der Rolle (22) aus der Ladeposition (44) in der Entnahmeposition (32) zum Beladen der Ladevorrichtung (28) oder in der Betriebsposition (30).

## Claims

1. A baler, in particular a round baler, having a compression device (12) for compressing bales of crop, and a wrapping device (16) downstream of the compression device (12) for wrapping a compressed bale with a wrapping material which is stored on rolls (22), wherein the wrapping device (16) has a wrapping arm (18) which is rotatably mounted on a support frame (20) and has at least one roll holder (24), wherein at least one roll (22) of the wrapping material can be mounted on the roll holder (24) in an operating position (30) in order to unroll the wrapping material, and a loading device (28) for transferring at least one roll (22) of the wrapping material between the operating position (30) on the roll holder side and/or an unloading position (32) on the compressing chamber side,
**characterized in that**
the loading device (28) has at least one loading arm (36), wherein the loading arm (36) is disposed on the support frame (20), in particular on a vertical section (38) of the support frame (20).

2. The baler according to claim 1, **characterized in that** the loading arm (38) is configured so as to be displaceable in rotation and/or in translation, in particular in the vertical direction, substantially parallel to a section (38) of the support frame (20).

3. The baler according to claim 1 or claim 2, **characterized in that** the loading arm (36) has at least one first roll retainer (40) for manipulating rolls (22).

4. The baler according to one of the preceding claims, **characterized in that** the loading arm (36) has a second roll retainer (42) which in particular is disposed at an end of the loading arm (36) which is opposite the first roll retainer (40).

5. The baler according to one of the preceding claims, **characterized in that** the loading arm (36) is substantially planar in configuration and is elongate in extent, wherein the loading arm (36) is rotatably mounted so as to be substantially central on the support frame (20) and has at least one roll retainer (40, 42) at the end thereof.

6. The baler according to one of the preceding claims, **characterized in that** a roll retainer (40, 42) is constructed in the form of a recess (50) on the loading arm (36).

7. The baler according to one of the preceding claims, **characterized in that** a respective roll carrier (48) is provided in order to hold a roll (22), wherein each roll carrier (48) is constructed such that it can be received by the loading arm (36) and/or the roll retainer (40, 42).

8. The baler according to one of the preceding claims, **characterized in that** a storage device (34) is provided in order to store at least one roll (22) of wrapping material.

9. The baler according to claim 8, **characterized in that** the storage device (34) has a carrier retainer (52) for receiving a respective roll carrier (48), wherein in order to receive a plurality of rolls (22), a plurality of carrier retainers (52) can be connected to each other in a rigid or movable manner.

10. A method for operating a baler (10) with a wrapping device (16), in particular in accordance with one of the preceding claims 1 to 9, **characterized by** the steps of:
- moving to an unloading position (32) with a loading arm (36) of a loading device (28);
- picking up a roll (22) of the wrapping material from the unloading position (32) by means of the loading arm (36);
- driving the loading arm (36) in rotation and/or in translation from the unloading position (32) to an operating position (30) on a roll holder (24) on the side of the wrapping arm;
- setting the roll (22) down in the operating position (30), wherein in the operating position (30), the roll (22) is disposed in the roll holder (24) on the wrapping arm (18).

11. The method for operating a baler (10) with a wrapping device (16) according to claim 10, **characterized by** the further steps of:
- moving to the operating position (30) in order to remove a roll (22) to be exchanged by means of the loading arm (36);
- driving the loading arm (36) with one or two rolls (22) in rotation and/or in translation;
- setting down the roll (22) to be exchanged and which has been removed from the operating position (30) in the unloading position (32), in particular in the unloading position (32) from which the new roll (22) has been removed.

12. The method for operating a baler (10) having a wrapping device (16) according to claim 10 or claim 11, **characterized by** the steps of:
- moving to a loading position (44), which in particular is disposed below an unloading position (32) using the loading arm (36) in order to pick up a roll (22) of the wrapping material;
- driving the loading device (28) from the loading position (44) to the unloading position (32) or operating position (30);
- setting the roll (22) down from the loading position (44) in the unloading position (32) in order to load the loading device (28), or in the operating position (30).

## Revendications

1. Une presse à balles, en particulier presse à balles rondes, comprenant un dispositif de pressage (12) pour presser des balles à partir de produit récolté et comprenant un dispositif d'enrubannage (16) disposé en aval du dispositif de pressage (12) pour envelopper une balle pressée avec un matériau d'enrubannage, lequel est tenu en réserve sur des rouleaux (22), le dispositif d'enrubannage (16) comportant un bras d'enrubannage (18) monté en rotation sur un bâti porteur (20) et muni d'au moins un support de rouleau (24), au moins un rouleau (22) du matériau d'enrubannage pouvant être disposé sur le support de rouleau (24) dans une position de fonctionnement (30) pour dévider le matériau d'enrubannage, et un dispositif de chargement (28) pour transférer au moins un rouleau (22) du matériau d'enrubannage entre la position de fonctionnement (30) côté support de rouleau et/ou une position de prélèvement (32) côté chambre de pressage, **caractérisée en ce que** le dispositif de chargement (28) comporte au moins un bras de chargement (36), le bras de chargement (36) étant disposé sur le bâti porteur (20), en particulier sur une portion verticale (38) du bâti porteur (20) .

2. Presse à balles selon la revendication 1, **caractérisée en ce que** le bras de chargement (36) est conçu avec une possibilité de déplacement en rotation et/ou, en particulier dans la direction verticale, en translation sensiblement parallèlement à une portion (38) du bâti porteur (20) .

3. Presse à balles selon une des revendications 1 ou 2, **caractérisée en ce que** le bras de chargement (36) comporte au moins un premier récepteur de rouleau (40) pour manipuler des rouleaux (22).

4. Presse à balles selon une des revendications précédentes, **caractérisée en ce que** le bras de chargement (36) comporte un second récepteur de rouleau (42) qui est disposé en particulier sur une extrémité du bras de chargement (36) opposée au premier récepteur de rouleau (40).

5. Presse à balles selon une des revendications précédentes, **caractérisée en ce que** le bras de chargement (36) est de conformation essentiellement plate et présente une extension allongée, le bras de chargement (36) étant monté à rotation sensiblement en son centre sur le bâti porteur (20) et comportant, à ses extrémités, au moins un récepteur de rouleau (40, 42).

6. Presse à balles selon une des revendications précédentes, **caractérisée en ce qu'**un récepteur de rouleau (40, 42) est conformé en évidement (50) sur le bras de chargement (36).

7. Presse à balles selon une des revendications précédentes, **caractérisée en ce que**, pour maintenir un rouleau (22), est prévu respectivement un porte-rouleau (48), un porte-rouleau (48) étant conçu respectivement pour être reçu par le bras de chargement (36) et/ou par le récepteur de rouleau (40, 42).

8. Presse à balles selon une des revendications précédentes, **caractérisée en ce qu'**un dispositif de stockage (34) est prévu pour tenir en réserve au moins un rouleau (22) du matériau d'enrubannage.

9. Presse à balles selon la revendication 8, **caractérisée en ce que** le dispositif de stockage (34) comporte, pour recevoir un porte-rouleau (48), respectivement un logement de porte-rouleau (52), plusieurs logements de porte-rouleau (52) pouvant être reliés entre eux de manière rigide ou mobile pour recevoir plusieurs rouleaux (22).

10. Procédé de fonctionnement d'une presse à balles (10) comprenant un dispositif d'enrubannage (16), en particulier selon une des revendications précédentes 1 à 9, **caractérisé par** les étapes consistant à
- atteindre une position de prélèvement (32) avec un bras de chargement (36) d'un dispositif de chargement (28) ;
- prendre en charge un rouleau (22) du matériau d'enrubannage à partir de la position de prélèvement (32) au moyen du bras de chargement (36) ;
- déplacer en rotation et/ou en translation le bras de chargement (36) depuis la position de prélèvement (32) jusqu'à une position de fonctionnement (30) sur un support de rouleau (24) côté bras d'enrubannage ;
- déposer le rouleau (22) dans la position de fonctionnement (30), dans la position de fonctionnement (30) le rouleau (22) étant disposé dans le support de rouleau (24) sur le bras d'enrubannage (18).

11. Procédé de fonctionnement d'une presse à balles (10) comprenant un dispositif d'enrubannage (16) selon la revendication 10, **caractérisé par** les étapes consistant à
- atteindre la position de fonctionnement (30) pour prélever un rouleau à remplacer (22) au moyen du bras de chargement (36) ;
- déplacer en rotation et/ou en translation le bras de chargement (36) avec un ou deux rouleaux (22) ;
- déposer le rouleau à remplacer (22), prélevé à la position de fonctionnement (30), dans la position de prélèvement (32), en particulier dans la position de prélèvement (32) où le nouveau rouleau (22) a été prélevé.

12. Procédé de fonctionnement d'une presse à balles (10) comprenant un dispositif d'enrubannage (16) selon une des revendications 10 ou 11, **caractérisé par** les étapes consistant à
- atteindre une position de chargement (44), en particulier située au-dessous d'une position de prélèvement (32), avec le bras de chargement (36) pour prendre en charge un rouleau (22) du matériau d'enrubannage ;
- déplacer le dispositif de chargement (28) depuis la position de chargement (44) vers la position de prélèvement (32) ou la position de fonctionnement (30) ;
- déposer le rouleau (22) à partir de la position de chargement (44) dans la position de prélèvement (32) pour charger le dispositif de chargement (28) ou dans la position de fonctionnement (30).
